# EUROPEAN PATENT APPLICATION

(11) **EP 1 850 251 A2**
(43) Date of publication of application: **31.10.2007**
(21) Application number: 07251743.6
(22) Date of filing: 25.04.2007
(51) Int. Cl.: G06F 17/30

(54) **Image viewer**

(30) Priority: 28.04.2006 JP 2006126196
(71) Applicant: FUJIFILM Corporation, Minato-ku Tokyo (JP)
(72) Inventor: Makioka, Katsuya, c/o Fujifilm Corporation, Asaka-shi, Saitama (JP)
(74) Representative: Stevens, Jason Paul

(57) **Abstract**

In an image viewer (10), a lot of image data files are registered in a database (15a). In each image data file, positional data is attached to image data, indicating a camera location at which the image data is captured. An image arrangement decider (22a) gets the positional data from the image data files, and decides a lattice arrangement of registered images based on the positional data such that the relative positions of the images in the lattice correspond to the correlations between the camera locations of these images. A control device (11) controls a display device (16) to display the images (30) tightly in the decided arrangement on a screen. Information relating to the camera locations of the images, e. g. borders, place names or a map, may be retrieved based on the attached positional data from another database (15b), and displayed in addition to the images.

## Description

### FIELD OF THE INVENTION

The present invention relates to an image viewer that displays a lot of images, which are registered image data files in an image database, efficiently on a screen.

### BACKGROUND OF THE INVENTION

Imaging apparatuses like digital cameras have recently been popular. Because the imaging apparatuses store captured images as image data, the captured images are available for inspection on a screen of a display device without the need for printing them. In order to manage the image data of a huge number of images, it is desirable registering the image data in an image database in such a way that the image data may be efficiently retrievable and displayable.

As a method for enabling efficient retrieval and display of aimed image data, a method of hierarchical image feature-based visualization has been known for example from JPA 2005-525606. According to this method, a distance metric is calculated as an index of similarity between individual images based on characteristic values of the image data, such as color data of the images, to display the images in a scatter chart. Also a data display method has been known for example from JPA 2004-62356, whereby similarities between individual images are determined based on characteristic values of the image data, such as color data and luminance data of the images, and the images are displayed in a lattice such that adjacent images have the greatest similarity.

However, in the former mentioned prior art, as the images are displayed in such a scatter chart that the distances reflect the image dissimilarities, some images overlap and some are arranged at intervals. In view of space efficiency of the display screen as well as efficient display of the images, this method is insufficient. Furthermore, since the above prior arts decide the arrangement of the images according to the characteristic values such as color or luminance of the image data, the positions of the images on the screen do not reflect the camera locations at which these images are captured. However, it is desirable to display the images in an arrangement that reflects the positional relation between the contents of these images.

### SUMMARY OF THE INVENTION

In view of the foregoing, a primary object of the present invention is to provide an image viewer that displays a huge number of images with a high efficiency and facilitates recognizing the relation between the camera locations of these images.

To achieve the above object, an image viewer of the present invention comprises an image database having image data files registered therein, wherein positional data indicating a camera location of capturing an image is attached to image data of the image in each of the image data files; a display data producer for producing display data from the image data; a display device for displaying images based on the display data; and an image arrangement deciding device for deciding an arrangement of the images to display on the display device, wherein the image arrangement deciding device gets the positional data of a plural number of images from the image database, and determines based on the positional data which images are the nearest to a particular image with respect to their camera locations and where the nearest images adjoin the particular image, to decide an arrangement of the images in an array, and wherein the display data producer produces display data for displaying the images in the array arranged adjacently to one another according to the decided arrangement.

According to a preferred embodiment, the image viewer further comprises an image input device for inputting image data; a registration judging device for judging whether the input image data satisfy predetermined conditions for registration or not; and a registration control device for registering the input image data in the image database when the registration judging device judges that the input image data satisfy the predetermined conditions.

This configuration prevents inadequate images from being registered in the image database, so the storage capacity of the image database is utilized effectively.

Preferably, the image viewer further comprises an image input device for inputting image data; an input operation device for inputting positional data; and a registration control device that judges whether positional data is attached to the input image data or not, and adds positional data as being input by the input operation device to those input image data having no positional data attached thereto, before registering the input image data in the image database. Thereby, even those image data files which have no positional data as they are input in the image viewer are registered with necessary positional data.

Preferably, the image viewer comprises a grouping device for sorting the image data files as registered in the image database into groups based on the attached positional data, and deciding a representative image of each group, wherein the image arrangement deciding device decides an arrangement of the representative images of the respective groups to be displayed on the display device. Thus, a huge number of images are displayed integrally on a screen.

The display device may preferably display position-related information in addition to the images, the position-related information having relation to the positional data of the displayed images.

When an image is chosen among of the displayed images the display device displays position-related information that has relation to the positional data of the chosen image.

According to another preferred embodiment, the image viewer further comprises an input operation device for designating a condition for searching, wherein attribute data indicating attributes of each image is attached to the image data, and when a particular attribute is designated as the condition for searching through the input operation device, the display device changes its display condition so that those images which have the designated attribute are distinguishable from other images.

The image viewer of the present invention may be composed as a network system, wherein the image database and the image arrangement deciding device are provided in an administrative image server, whereas the display device is provided in each one of terminal devices connected to the server through the network. Then, the image database is shared with many users for registering and disclosing the image data.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a block diagram illustrating an internal structure of an image viewer;
Figure 2 is a flowchart explaining an operation of the image viewer, wherein all image data files are registered without any limitation;
Figure 3 is an explanatory diagram illustrating a display screen displaying an array of images in a lattice arrangement;
Figure 4 is a flowchart explaining an image registering process putting some limitation on the registration;
Figure 5 is a flowchart explaining an image registering process enabling registration of image data having no positional data;
Figure 6 is a flowchart explaining an image display process for displaying images in groups;
Figure 7 is an explanatory diagram illustrating a display screen wherein border lines between areas and area names are displayed on an image array;
Figure 8 is an explanatory diagram illustrating a display screen wherein a map is displayed in place of a chosen image;
Figure 9 is an explanatory diagram illustrating a display screen wherein a period of time is designated by a time slider, and those images already captured by that time period are displayed distinguishably from others;
Figure 10 is a flowchart explaining an image retrieval process wherein an attribute is designated as a condition for searching;
Figure 11 is an explanatory diagram illustrating a display screen displaying a result of searching based on the designated attribute;
Figure 12 is a flowchart explaining an image retrieval process wherein a positional condition is designated for searching;
Figure 13 is an explanatory diagram illustrating a display screen displaying a result of searching based on the designated positional condition; and
Figure 14 is a block diagram illustrating a structure of an image viewer system.

### DESCRIPTION OF THE PREFERRED EMBODIMENTS

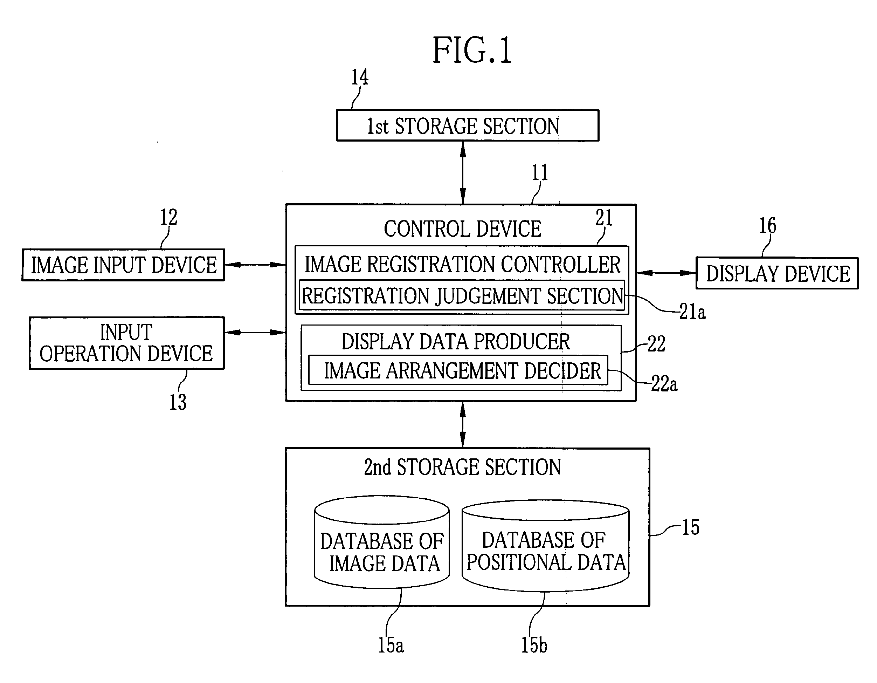

Fig.1 shows an image viewer 10 that is constituted of a control device 11, an image input device 12, an input operation device 13, a first storage section 14, a second storage section 15, and a display device 16. The control device 11 is connected to the respective components of the image viewer 10, to control them.

The image input device 12 is a device for inputting image data, that is, an image data obtaining device for obtaining image data from users. For example, a memory card reader, a CD-ROM drive or the like is used as the image input device 12.

The input operation device 13 is an input device that is operated by the user to input many kinds of data including after-mentioned positional data. As being operated by the user, the input operation device 13 outputs an operational signal to the control device 11. For example, the input operation device 13 is a keyboard, a mouse or the like.

The first storage section 14 stores image data temporarily as the image data is entered through the image input device 12. For example, a flash memory, a hard disc or the like is used as the first storage section 14. The second storage section 15 is a data storage device, such as a hard disc, and stores a database 15a of image data and a database 15b of positional data.

In the image database 15a are registered a lot of image data files, and attribute data indicating attributes of the respective image data files, e.g. time data indicating the date and time of capturing each image, and positional data relating to a camera location of capturing each image, such as GPS (global positioning system) data indicating latitude and longitude of the camera location. In the positional database 15b are registered positional data, such as address data, landmark data, GPS correlation map data and so on. When an image data file is registered in the image database 15a, positional data relating to this image data file, such as an address, a landmark and other data, are retrieved from the positional database 15b and registered in association with this image data file. The display device 16 is a device for displaying a group of images and may for example be an LCD or a CRT display.

The control device 11 is provided with an image registration controller 21 and a display data producer 22. The image registration controller 21 is a registering device for registering image data in the image database 15a. The image registration controller 21 is provided with a registration judgment section 21a that judges whether image data files stored in the first storage section 14 satisfy conditions for registration. The image registration controller 21 registers only those image data files which are judged to satisfy the conditions for registration in the second storage section 15a.

The display data producer 22 is provided with an image arrangement decider 22a that decides the arrangement of the images of one group on a screen of the display device 16. Based on the positional data attached to the image data, the image arrangement decider 22a determines which images are the nearest to a particular image with respect to their camera locations, and where the nearest images should adjoin the particular image. According to the determined positional relations between the camera locations of the respective images, the image arrangement decider 22a decides a lattice arrangement of the images. The display data producer 22 produces display data for displaying an array of images arranged in adjacent to one another according to the decided arrangement.

Note that the image arrangement may be decided so as to satisfy bordering conditions between predetermined regions or areas, e.g. according to data of borders between prefectures. It is also possible to arrange the images in accordance with a geographical contour of a designated area, e.g. Saitama Prefecture.

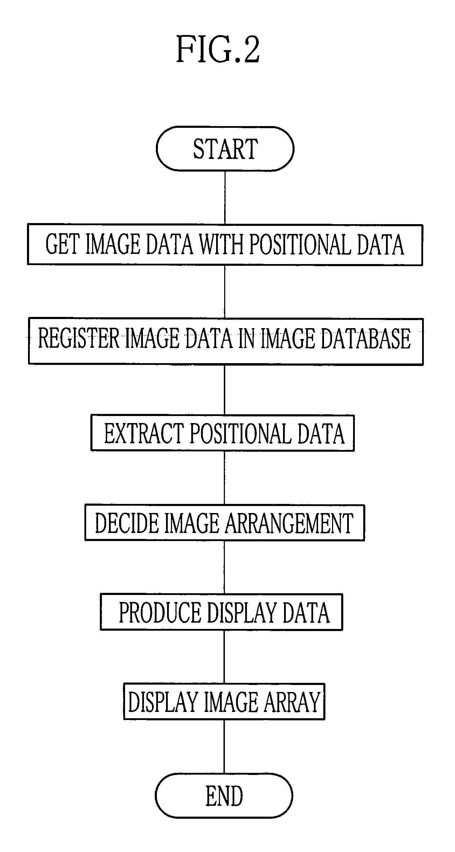

Next, an operation of the image viewer 10 as configured above will be described with reference to a flowchart of Fig.2.

The control device 11.controls the image input device 12 to get an image data file with positional data indicating its camera location. For example, the image data file includes GPS data as the positional data and is read out from a memory card that stores image data files captured by a digital camera. Or the image data file may be obtained from a camera phone as an E-mail attachment. The control device 11 stores the obtained image data file in the first storage section 14.

Thereafter, the image registration controller 21 registers the image data file in the image database 15a. Note that, in order to display an array of images as thumbnails instead of real-size images, a thumbnail image data file of a predetermined size is produced from each image data file, and the thumbnail image data file and the original image data file are registered in the image database 15a.

On registering the image data file, the image registration controller 21 searches the positional database 15b based on the attached positional data, e.g. the GPS data, of this image data file, to retrieve positional data relating to the attached positional data, such as an addresses, a landmarks and other data, and registers the retrieved positional data in association with the image data in the image database 15a.

Thereafter, the image arrangement decider 22a obtains the positional data of the large number of image data files registered in the image database 15a, and decides an arrangement of these images based on the obtained positional data so as to arrange the images adjacently to one another in a latticed array.

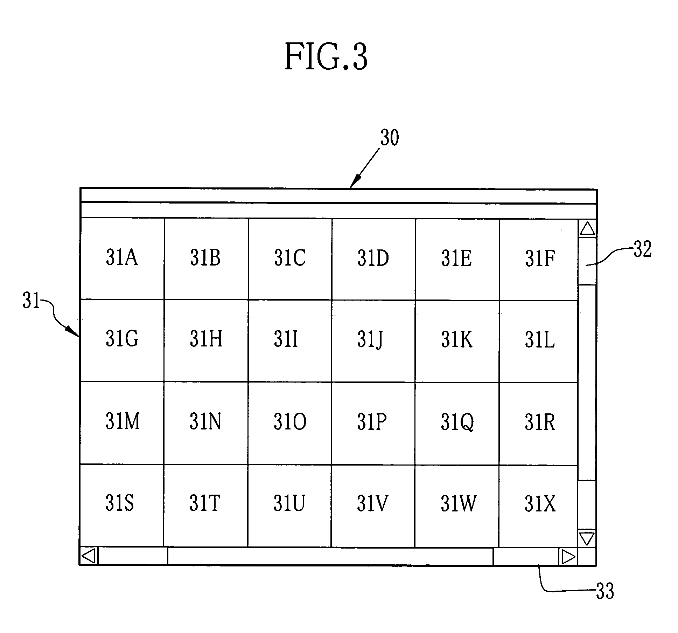

The display data producer 22 produces the display data representative of the array of images arranged in the decided arrangement. Thereafter, the control device 11 controls the display device 16 based on the display data, to drive the display device 16 to display the image array. Fig.3 shows an example 31 of the image array displayed on a display screen 30 of the display device 16. The image array 31 consists of 24 rectangular image frames 31A to 31X arranged tightly in a 4x6 matrix.

Besides the image array 31, the display screen 30 displays scroll bars 32 and 33 on the right and bottom sides of the image array 31 respectively. Operating the scroll bars 32 and 33 by the input operation device 13 causes the image array 31 to scroll to display another image array including other images than before. Specifically, operating the scroll bar 32 causes the image array 31 to scroll up and down, and operating the scroll bar 33 causes the image array 31 to scroll right and left. In the present example, the image array 31 are so arranged that the top side of the screen 30 correspond to the north with respect to the camera locations of the images displayed in the frames 31A to 31X. Therefore, as the image array 31 is scrolled upwards by operating the scroll bar 32, other images are displayed sequentially from those captured in southern areas to those captured in northern areas.

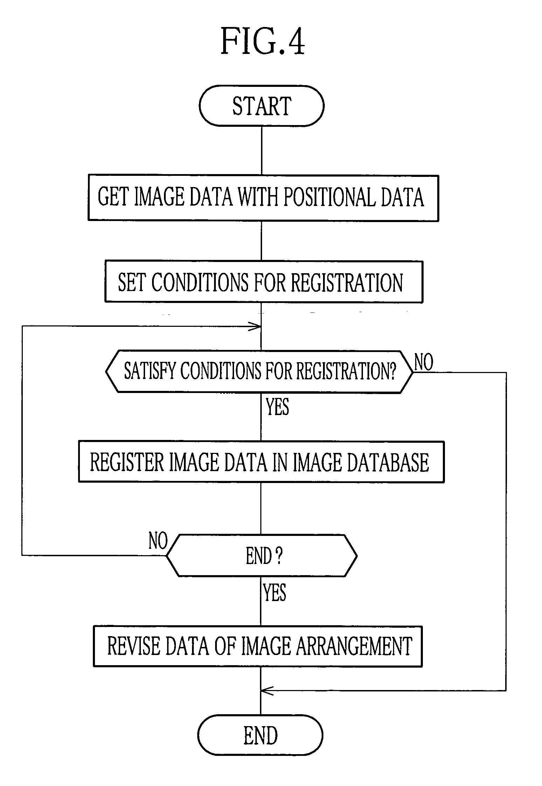

In the above-described operation, all image data files input through the image input device 12 are registered in the image database 15a. Now another operation will be described with reference to a flowchart of Fig. 4, wherein merely those image data files which satisfy conditions for registration are registered in the image database 15a.

The control device 11 controls the image input device 12 to obtain image data with positional data, and stores the obtained image data in the first storage section 14. Thereafter, the image registration controller 21 sets the conditions for registration, including a judgment based on the positional data as to whether the image is captured in a particular area or not, a visual judgment by the administrator on the image contents, an automatic judgment on the image contents, and a judgment as to whether a designated time comes or not, and the like.

After the conditions for registration are set up, the registration judgment section 21a judges as to whether each image data file satisfies the conditions for registration. If not, the image data file is not registered. If the image data file satisfies the conditions for registration, the image registration controller 21 registers the image data file in the image database 15a in association with an address and a landmark corresponding to the positional data of that image data file, in the same way as described above.

Thereafter, the control device 11 judges whether all the image data files are subjected to the judgment and registration process. If not, the judgment and registration process is continued. When all the image data files have been subjected to the judgment and registration process, the process is terminated.

If the conditions for registration include a condition that the image data should be registered when a designated time comes, the judgment process as to whether the image data satisfy the conditions for registration or not is restarted when the designated time has come.

In this way, the input image data is checked with respect to the predetermined conditions for registration, and only those image data files which satisfy these conditions are automatically registered. Therefore, it becomes possible to filter the image data on the registration according to the predetermined conditions like the camera locations or the image contents. Since unnecessary image data files are not registered, the capacity of the second storage section 15 is used efficiently.

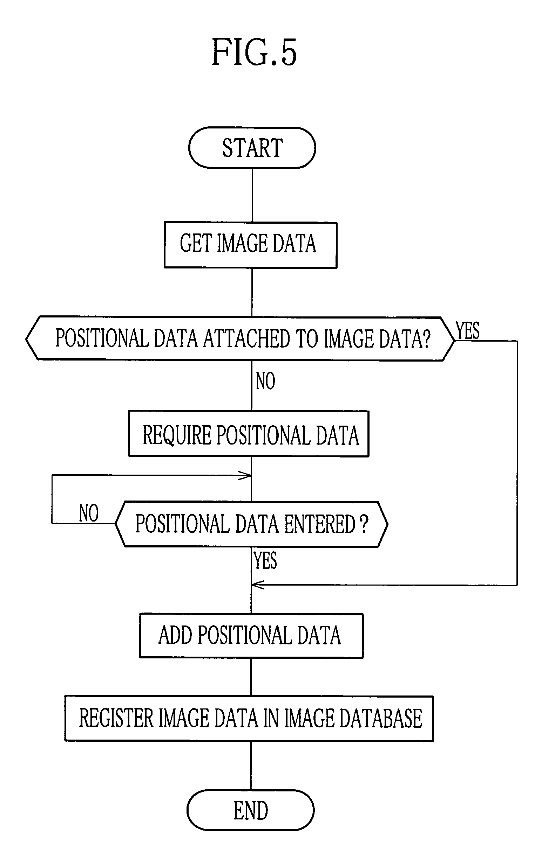

Although the above description relates to a case where the positional data is attached to each image data, there may be such image data files that do not include positional data. In that case, it is possible to add such positional data to the image data that is entered through the input operation device 13, before registering the image data in the image database 15a. An image registering process that takes account of the image data without positional data will be described with reference to a flowchart of Fig.5.

The control device 11 controls the image input device 12 to obtain image data, and stores the obtained image data in the first storage section 14. Thereafter, the image registration controller 21 judges whether positional data is attached to the obtained image data or not. This judgment is made, for example, as to whether GPS data is written in an Exif-tag or not if the image data is Exif-JPG format. If it is judged that the positional data is attached to the image data, the sequence proceeds to an after-mentioned positional data complementing process.

If it is judged that the positional data is not attached to the image data, the control device 11 controls the display device 16 to display a message requiring positional data, e.g. "Please enter positional data".

As positional data, an address, a landmark name or longitude and latitude of a location may be entered through the input operation device 13. To designate the address, text data or a zip code of the address may be entered, or the address is selected from an address list or on a map.

Thereafter, the control device 11 checks if any positional data is entered through the input operation device 13. If not, the control device 11 standbys for the entry of positional data.

When the control device 11 detects that any of three kinds of positional data, i.e. address data, landmark data or GPS data, is entered, then the image registration controller 21 searches the GPS correlation map showing correlations between addresses, GPS data, and landmarks, in the positional database 15b, and add other related positional data to the entered positional data. Namely, the image registration controller 21 associates the entered positional data and the positional data retrieved from the positional database 15b with the image data, and thereafter registers the image data in the image database 15a. Then, the image registration process is terminated.

In this way, regardless of whether any positional data is attached to the image data or not, other necessary positional data are automatically attached to the image data based on requisite minimum positional data that is already attached to the image data or entered afterward through the input operation device 13. Since the necessary positional data are attached to every registered image data file, it becomes possible to treat all image data files equally.

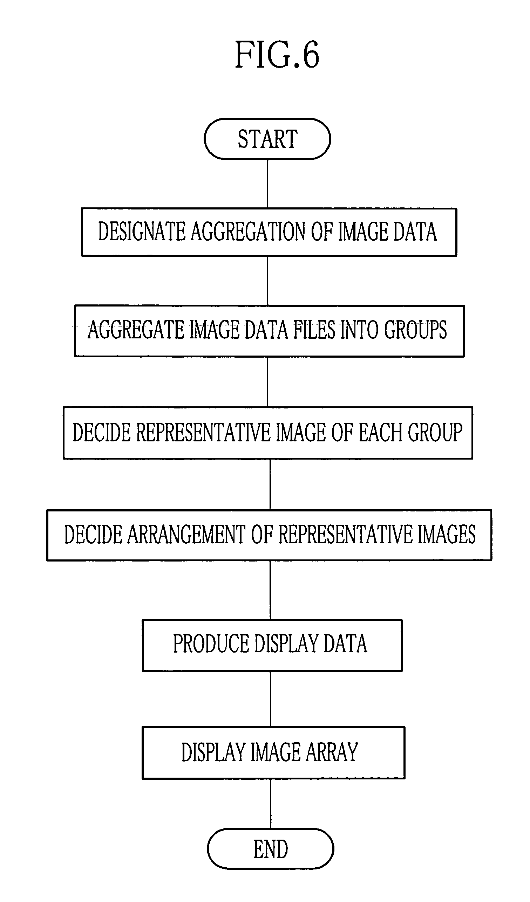

When a huge number of image data files have been registered in the above-described manner in the image database 15a, the volume of display data for displaying all the images in the image array 31 becomes so large that the processing speed of the display device 16 decelerates. To order to avoid the processing speed deceleration, it is necessary to gather the images into groups according to certain categories, and display them as aggregates. Now the operation of aggregating the images into groups and displaying representative images of the respective groups will be described with reference to a flowchart of Fig.6.

First, aggregation is designated. The aggregation is a regional unit for grouping the image data based on the attached positional data and displaying them as data aggregates, and may be prefecture, municipality, landmark or the like. The aggregation may be designated by entering data through the input operation device 13, or automatically by the control device 11 based on the distribution of the camera locations of the image data files registered in the image database 15a.

The control device 11 is a grouping device that aggregates the image data files into groups according to the designated aggregation, and decides a representative image of each group. After the aggregation is designated, the control device 11 sorts all the image data files registered in the image database 15a into groups according the designated aggregation. For example, if prefecture is designated as the aggregation, those image data files which are captured in the same prefecture are sorted into the same group.

Thereafter, the control device 11 decides a representative image data file of each group. The representative image data files may be decided in an appropriate way. For example, past records of the individual image data files, indicating how many times each image data file has been browsed and for what purposes the image data file has been used, are converted into scores. One getting the highest score within each group is decided to be the representative image of that group. It is also possible to sort the image data files in the sequence of time of capturing the image data files and decide the latest image data file or the oldest one to be a representative. Alternatively, a representative image of a group may be such an image that contains a subject representing a feature of an area in which the image group belongs, since the subjects of the respective images are known from their attribute data.

When the representative image data files of the respective groups are decided, the image arrangement decider 22a decides the arrangement of the representative images based on the positional data attached to these image data files, in the same way as described with respect to general images. The display data producer 22 produces display data for an image array 31 consisting of the representative images arranged in the decided image arrangement. Thereafter, the control device 11 controls the display device 16 based on the display data, to display the image array 31 of the representative images.

Displaying the image data as aggregates grouped according to the designated aggregation enables displaying images of a variety of areas efficiently on a screen of a limited size.

In the present embodiment where the images are displayed in the units of designated groups, it is possible to mark the representative image of each group with a frame or a shadow so as to show that the marked image is a representative of a group of images. It is also possible to show how many images are aggregated by varying the thickness of the shadow of the representative image of this group correspondingly.

It is possible to display other images than the representative image seriatim in response to a predetermined action, e.g. mouse-over or click, on the representative image. It is also possible to switch the display screen in response to a predetermined operation, from displaying the image aggregates to another image display style.

Although the image viewer 10 simply displays the image array 31 on the display screen in the above embodiments, it is possible to display such position-related information with the image array 31 that have some relations to the positional data of the displayed images. As concrete examples of the position-related information, borderlines between regions, markers indicating landmarks, or a graphically-deformed route map may be displayed.

To display border lines in the image array 31 on the display screen 30, a group of images whose camera locations belong to the same area, such as the same prefecture, city or town, are surrounded with a line and another group of images are surrounded with another line. It is also possible to display the regional names on the images of the respective regions.

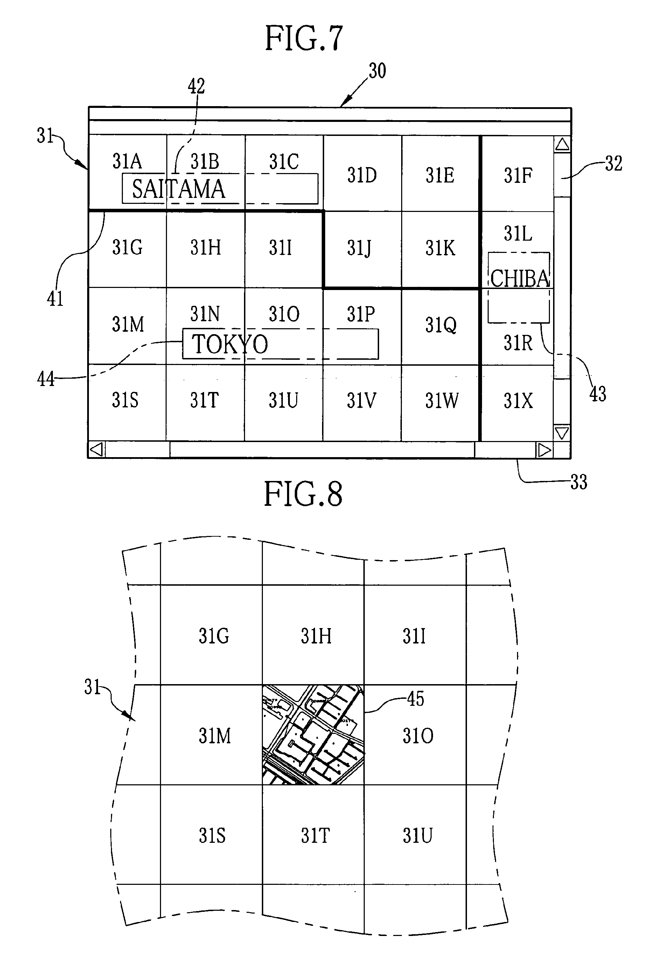

For example, as shown in Fig.7, if the image array 31 consists of images 31A to 31E, 31J and 31K captured in Saitama Prefecture, images 31F, 31L, 31R and 31X captured in Chiba Prefecture and images 31G to 31I, 31M to 31Q and 31S to 31W captured in Tokyo, border lines 41 between these areas, i.e. prefectures, are displayed with the image array 31.

Furthermore, a caption "Saitama" 42 is displayed on the images captured in Saitama Prefecture, a caption "Chiba" 43 is displayed on the images captured in Chiba Prefecture, and a caption "Tokyo" 44 is displayed on the images captured in Tokyo.

The markers indicating the landmarks may consist of an icon or a symbol and a landmark name, and is displayed on a center of a group of images captured at that landmark, after the image array 31 is displayed on the display screen 30.

To display a route map on the image array 31, a station nearest to a landmark is chosen for a group of images relating to that landmark, and another station is chosen for another group in the same way. The chosen stations are displayed on the respective image groups in the same way as the above-described landmark marker, and then the stations are interconnected through lines to form the route map. It is also possible to display the route names along these lines.

In the above-description, border lines, landmark markers and graphically-deformed traffic lines are referred to as examples of the position-related information to be displayed with the image array 31. These three kinds of data may be displayed independently from each other or in combination with each other.

Now another embodiment will be described with reference to Fig.8, wherein the position-related information is displayed in response to a predetermined operation.

When an image, e.g. an image 31N, is chosen in the image array 31 through the input operation device 13, e.g. the mouse, and the predetermined operation, e.g. double-clicking the mouse, is done on the chosen image 31N, the chosen image 31N disappears or peels off. At that time, the control device 11 retrieves map data from the positional database 15b in correspondence with the positional data of the chosen image 31N, and controls the display device 16 based on the retrieved map data, to display a map 45 in place of the image 31N.

In other words, only the chosen image 31N is peeled off to show the map 45 under it. Therefore, it looks to a person who chooses the image 31N that the map is displayed in an image layer under the image array 31.

In the above embodiment, a map corresponding to a chosen image is displayed in place of the chosen image. But it is alternatively possible to display a corresponding map at a designated scale on another screen of a designated size when an image is chosen among the image array.

In the above-described embodiment, a map is displayed in correspondence with a chosen image. It is alternatively possible to display a landmark name in a tool chip or the like at a position pointed by a mouse cursor in a chosen image among the image array 31. It is also possible to pre-register personal positional data, such as "my house", "my favorite place" and the like, so that the mouse cursor automatically moves to chose one of those images corresponding to the pre-registered positional data when the mouse cursor is brought into a certain distance range to that image by operating the scroll bars 32 and 33 and the mouse. In other words, the mouse cursor moves as if it is attracted to and automatically snaps at the pre-registered place. The pre-registered places may have different attractive forces depending upon their importance, by setting the above-mentioned distance range differently from one place to another.

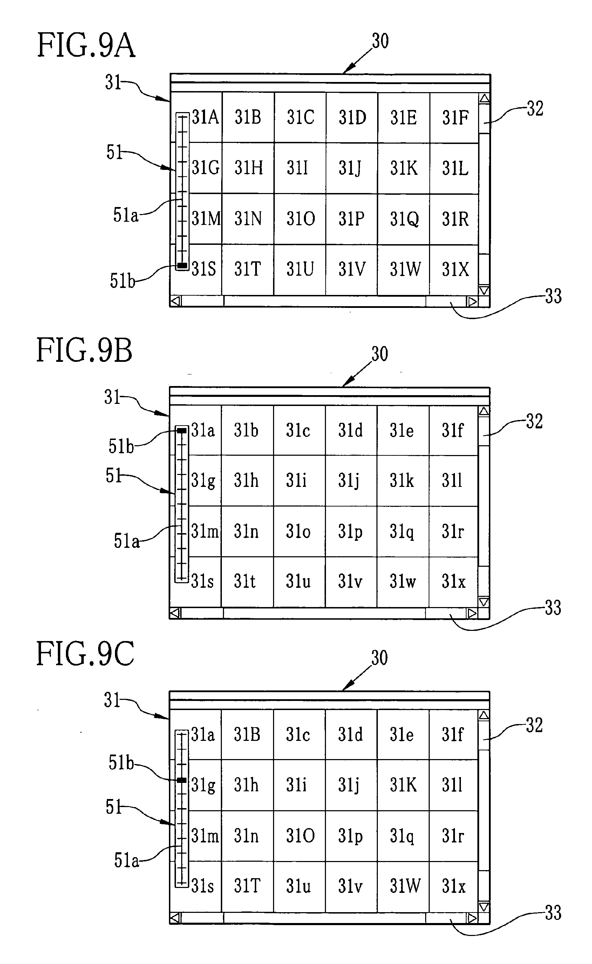

Next, another embodiment will be described with reference to Fig.9, wherein the image array 31 is displayed in such a way that reflects time data of the images, like the dates of capturing the images or time stamps of the images. As shown in Fig.9, a time slider 51 is displayed along the left margin of the display screen 30, the time slider 51 being provided with a time axis 51a and an operating member 51b.

The operating member 51b is moved with the mouse or the like up and down along the time axis 51a to shift the time about the image array 31 between the past and the present. That is, as the operating member 51b is moved to the topmost position of the time axis 51a, the time about the image array 31 is set to reflect the earliest time data of the images. On the other hand, as the operating member 51b is moved to the lowest position of the time axis 51a, the time about the image array 31 is set to reflect the latest time data. Thus, the display changes to reflect the time as the operating member 51b is moved along the time axis 51a. In this embodiment, those images which had been captured by a period of time indicated by the position of the operating member 51b are displayed in full colors, whereas other images are displayed in monochrome.

Specifically, as shown in Fig. 9A, where the operating member 51b is at the lowest position of the time axis 51a to set the display at the present time, all the images of the image array 31 are displayed in full colors, as implied by the reference numerals 31A to 31X, because they have been captured before now.

Where the operating member 51b is at the topmost position of the time axis 51a to set the display at the earliest time period, as shown in Fig.9B, all the images of the image array 31 are displayed in monochrome, as implied by the reference numerals 31a to 31x, because they had not been captured before then.

When the operating member 51b is moved to an intermediate time on the time axis 51a, as shown in Fig. 9C, those images which had been captured before the intermediate time, are displayed in full colors, as implied by the reference numerals 31B, 31K, 310, 31T and 31W. On the other hand, those which had not been captured before then are displayed in monochrome, as implied by the reference numerals 31a, 31c to 31j, 31l to 31n, 31p to 31v and 31x.

In the above embodiment, when a period of time is designated by the time slider 51, those images already captured at that time period are displayed in full colors, and other are displayed in monochrome, i.e. in black-and-white. But the discrimination based on the time data may be made by displaying the images in full colors, on one hand, and in sepia tone, on the other hand.

It is also possible to reflect the time data by fringing already captured images with particular frames to distinguish from others. It is alternatively possible to display only those images which had been captured before the designated time period, while making invisible of, e.g. blacking out, other images which had not yet been captured by that time period. Note that the time data is reflected on the display without changing the image arrangement inside the image array 31, so the correlations between the images based on their camera locations are maintained on the display screen 30.

Although the above-described embodiment changes the display of the image array 31 so as to reflect the time data of the images, it is possible to display the images so as to reflect other attribute data than the time and positional data of the images. If the attribute data, e.g. classification of the subject and image characteristic values, are attached as metadata to the individual image, those images which have the same attribute as designated by the user are made apparent on the display screen 30.

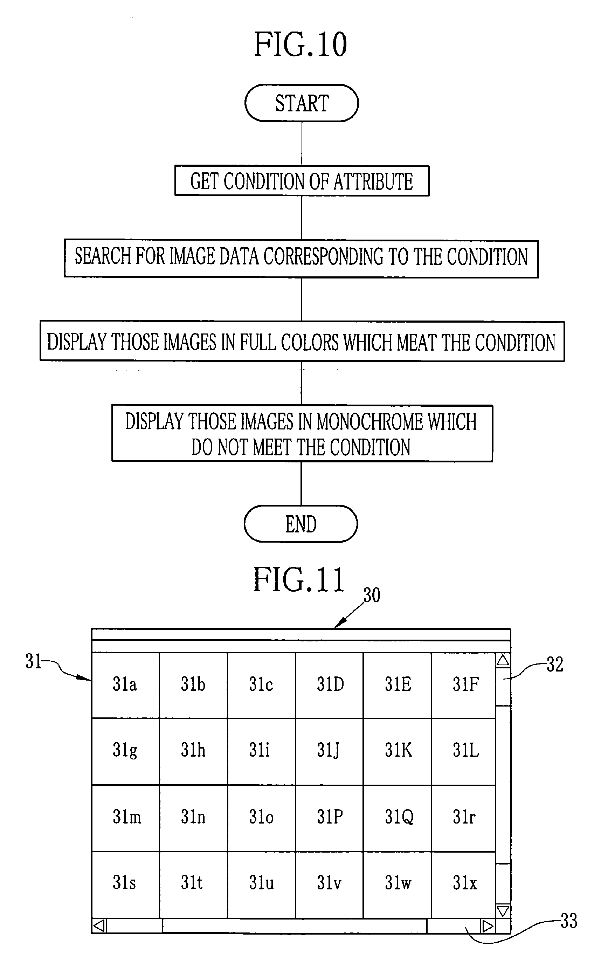

An embodiment of displaying the image array 31 so as to reflect the attribute data of the images will now be described with reference to a flowchart of Fig.10. When the user operates the input operation device 13 to designate a particular attribute, the control device 11 gets the particular attribute as a condition for searching. The designation of the attribute may be done in an appropriate way. In this embodiment, "attribute" and "value" are designated in pairs as the condition for searching. The following description refers to an example where the designated attribute is "subject" and the designated value is "flower".

The control device 11 searches the image database 15a for those images which correspond to the designated condition. In this example, those images which contain flowers as their subjects are retrieved. Thereafter, the control device 11 controls the display device 16 such that the retrieved images, i.e. those containing flowers as their subjects, are displayed in full colors, as implied by 31D to 31F, 31J to 31L, 31P and 31Q, while those containing no flower as their subject are displayed in monochrome, as implied by 31a to 31c, 31g to 31i, 31m to 31o, 31r, 31s to 31x.

In this way, the images that meet the designated condition of attribute are displayed discriminately from the images that do not meet the designated condition, so it is easy to find the images that meet the designated condition.

In order to discriminate the images by their attribute data on the display screen, it is alternatively possible to display the images of one party in full color and another party in sepia tone, or display the images of one party with frames and another party without frames, or display only those images meeting the designated condition of attribute and make other images invisible, like the previous embodiment for reflecting the time data of the images on the display screen. In any case, the display changes to reflect the search result, without changing the image arrangement in the image array, so the positional relation between the images is maintained unchanged.

In the above-described embodiment, an image attribute is designed as a condition for searching, and those images meeting the designated condition are displayed distinguishably from others that do not meet the condition. It is also possible to use the positional data as a condition for searching for retrieving the images.

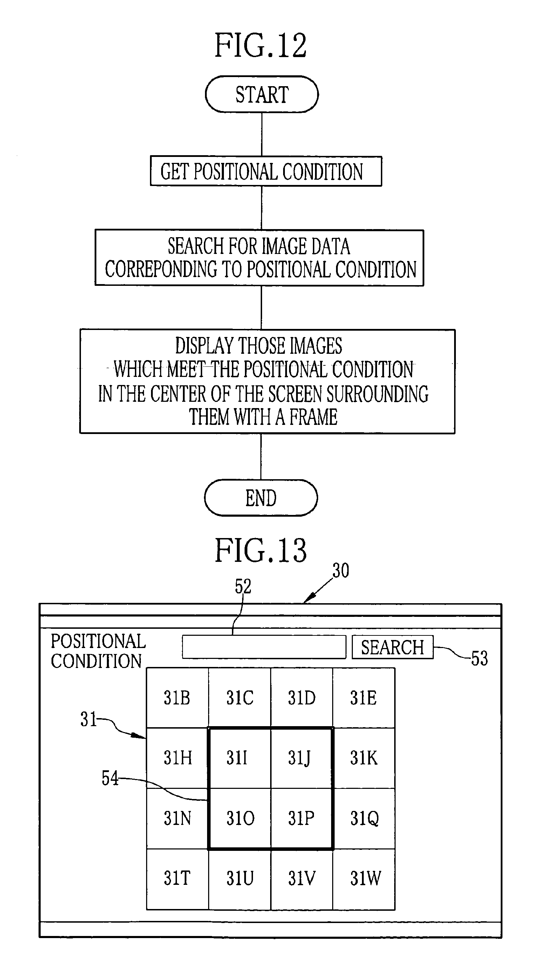

Now another embodiment will be described with reference to a flowchart of Fig.12, wherein the positional data is used as a condition for image retrieval and the image is displayed so as to reflect the result of image retrieval. As shown for example in Fig.13, the control device 11 controls the display device 16 to display an entry column 52 for entering a positional condition and a search button 53 beside an image array 31 on the display screen 30. The user operates the input operation device 13 to enter a landmark name, e. g. "Kinkakuj i Temple", as the positional condition for image retrieval, and turn the search button 53 on, the control device 11 gets the positional condition "Kinkakuji Temple".

Then, the control device 11 retrieves those image data files which meet the designated condition "Kinkakuji Temple". If, for example, images 31I, 31J, 31O and 31P meet the condition, the control device 11 controls the display device 16 to change the image arrangement of the image array 31 so as to display these images 31I, 31J, 31O and 31P in the center of the display screen 30, and surround these images 31I, 31J, 31O and 31P with a frame 54, to allow the user to notice instantly that these images meet the positional condition.

Although a landmark name is entered in the entry column 52 to designate the positional condition in the above-described embodiment, it is possible to enter either one or more of an address, a landmark and a pair of latitude and longitude, to designate the positional condition.

Although the image viewer 10 has been described as an independent apparatus, an image viewer of the invention may be composed on a network. An embodiment where the image viewer is composed on a network will be described below.

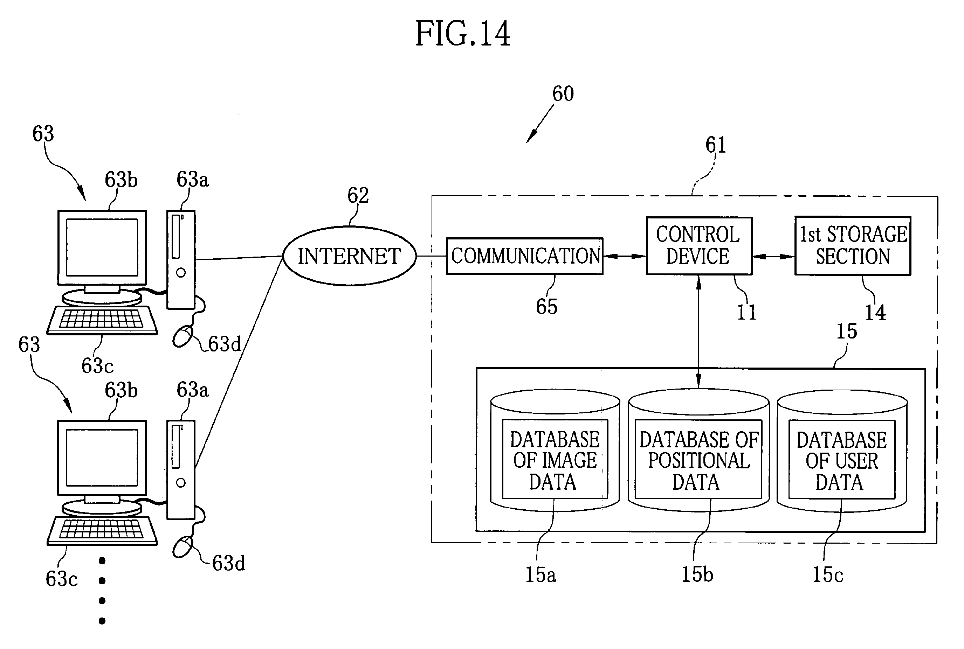

An image viewer system 60 shown in Fig.14 is composed of an administrative image server 61 and a lot of personal computers 63 connected to the host image server 62 through the Internet 62.

The personal computers 63 are terminals used by registered users. For example, the personal computer 63 is constituted of a main body 63a, a display 63b, a keyboard 63c and a mouse 63d. The user operates the keyboard 63c and the mouse 63d, to upload image data to register onto the administrative image server 61. Each image data is attended by positional data indicating a camera location at which the image data is captured.

The image data file is uploaded by sending it through a Web page, as an e-mail attachment, by use of FTP software or the like. The administrative image server 61 can also take the image data directly from a storage medium such as a CD-ROM or a memory card.

The administrative image server 61 is constituted of a controller 11, a first storage section 14, a second storage section 15 and a communication device 65. The communication device 65 is a device for communicating data between the administrative image server 61 and the personal computers 63 through a network, and may for example be a LAN card, a LAN board or the like.

The control device 11 controls the communication device 65 to obtain the image data uploaded from the personal computers 63, and stores the obtained image data temporarily in the first storage section 14. The second storage section 15 stores an image database 15a, a database 15b of positional data and a database 15c of user data.

In the user database 15c is registered administrative information for administering the users who register or browse the image data. The image database 15a and the positional database 15b store the image data and the positional data, respectively, like in the above-described image viewer 10.

The control device 11 controls the communication device 65 to disclose the image data registered in the image database 15a on the Internet 62. So the image data registered in the image database 15a is available for inspection to general public on the Internet 62. It is possible to limit the users who are allowed to browse the image data by setting publication range of the image data. Note that equivalent components are designated by the same reference numerals as in the above-described image viewer 10, so the detailed description of these components is omitted.

In this way, an image viewer is composed as a network system, so as to share the image database on the network. The user can share and display not only those images owned by him or her, but also those owned by others. Who registers the images in the image database can decide the object or range of disclosure of his or her registered images, such as private, his or her friends only, within his or her community, or general public (no limitation). It is also possible to designate a registrar for retrieving images based on their registrars as attribute data of the images, so as to display only those images which are registered by the designated person.

Although the images are displayed individually square frames arranged in a matrix in the illustrated embodiments, the shape of each image frame and the arrangement of the images are not limited to this embodiment. The image frames may be rectangular, equilateral-triangular, regular-hexagonal, or of another polygonal shape insofar as they are of the same shape and can be arranged in tight contact with one another.

Thus, the present invention is not to be limited to the above embodiments but, on the contrary, various modifications will be possible without departing from the scope of claims appended hereto.

## Claims

1. An image viewer (10) comprising:
an image database (15a) having image data files registered therein, wherein positional data indicating a camera location of capturing an image is attached to image data of said image in each of said image data files;
a display data producer (22) for producing display data from said image data;
a display device (16) for displaying images (31) based on said display data; and
an image arrangement decider (22a) for deciding an arrangement of said images to display on said display device, wherein said image arrangement decider gets said positional data of a plural number of images from said image database, and determines based on said positional data which images are the nearest to a particular image with respect to their camera locations and where the nearest images adjoin the particular image, to decide an arrangement of said images in an array (31), and wherein said display data producer produces display data for displaying said images in the array arranged adjacently to one another according to the decided arrangement.

2. An image viewer as claimed in claim 1, further comprising:
an image input device (12) for inputting image data;
a registration judging device (21a) for judging whether said input image data satisfy predetermined conditions for registration or not; and
a registration control device (21) for registering said input image data in said image database when said registration judging device judges that said input image data satisfy the predetermined conditions.

3. An image viewer as claimed in claim 1, further comprising:
an image input device (12) for inputting image data;
an input operation device (13) for inputting positional data; and
a registration control device (21) that judges whether positional data is attached to said input image data or not, and adds positional data as being input by said input operation device to those input image data having no positional data attached thereto, before registering said input image data in said image database.

4. An image viewer as claimed in claim 1, further comprising a grouping device (11) for sorting said image data files as registered in said image database into groups based on said attached positional data, and deciding a representative image of each group, wherein said image arrangement decider (22a) decides an arrangement of said representative images of the respective groups to be displayed on said display device.

5. An image viewer as claimed in claim 1, wherein said display device (16) may display position-related information (41, 42, 43) in addition to said images, said position-related information having relation to said positional data of said displayed images.

6. An image viewer as claimed in claim 1, wherein when an image is chosen among of said displayed images said display device displays position-related information (45) that has relation to said positional data of said chosen image.

7. An image viewer as claimed in claim 1, further comprising an input operation device (13) for designating a condition for searching, wherein attribute data indicating attributes of each image is attached to said image data, and when a particular attribute is designated as the condition for searching through said input operation device (13), said display device (16) changes its display condition so that those images which have the designated attribute are distinguishable from other images.

8. An image viewer as claimed in claim 7, wherein said attribute data include time data indicating the date and time of capturing each image, and when a particular period of time is designated through said input operation device (13), said display device (16) changes its display condition so as to permit distinguishing those images which had been captured by the time period and those which had not yet been captured by that time period.

9. An image viewer as claimed in claim 7, wherein said attribute data include subject data indicating the subject contained in each image, and when a particular subject is designated through said input operation device, said display device (16) changes its display condition so as to permit distinguishing those images which contain the designated subject from other images.

10. An image viewer as claimed in claim 1, further comprising an input operation device (13, 52) for designating a positional condition for searching, wherein when a particular place is designated through said input operation device, said display device (16) displays an image array including those images which are captured at said particular place.

11. An image viewer as claimed in claim 1, wherein said image database (15a) and said image arrangement decider (22a) are provided in an administrative image server that is connected to a network (62), whereas said display device is provided in each one of terminal devices (63) connected to said network.
